# EUROPÄISCHE PATENTSCHRIFT

(11) **EP 0 755 904 B1**
(45) Veröffentlichungstag und Bekanntmachung des Hinweises auf die Patenterteilung: **17.10.2001**
(21) Anmeldenummer: 96111976.5
(22) Anmeldetag: 25.07.1996
(51) Int. Cl.: C04B 35/117, C04B 35/645, B24D 3/16, B23B 27/14

(54) **Mischkeramik auf Aluminiumoxidbasis**
Ceramic mix based on alumina
Céramique mixte basée sur l'alumine

(30) Priorität: 28.07.1995 DE 19527624
(43) Veröffentlichungstag der Anmeldung: 29.01.1997
(73) Patentinhaber: CERASIV GmbH INNOVATIVES KERAMIK-ENGINEERING, D-73207 Plochingen (DE)
(72) Erfinder: Friederich, Kilian, Dr., 73207 Plochingen (DE); Lehmann, Siegbert, 73207 Plochingen (DE); Fripan, Michael, Dr., 71522 Backnang (DE); Klotz, Dietmar, 73035 Bezgenriet (DE); Ziegelbauer, Helmut, 73207 Plochingen (DE)
(74) Vertreter: Uppena, Franz, Dr.

(56) Entgegenhaltungen:
- JP-T1- 4 300 241
- US-A- 4 490 319
- US-A- 5 342 564
- DATABASE WPI Week 9249 Derwent Publications Ltd., London, GB; AN 92-403131 XP002016926 & JP-A-04 300 241 (MITSUBISHI MATERIALS CORP.) , 23.Oktober 1992
- DATABASE WPI Week 7609 Derwent Publications Ltd., London, GB; AN 76-15796X XP002016927 & JP-A-51 005 214 (MITSUBISHI MET. IND. KK.) , 16.Januar 1976
- T.Koyama und A.Nishiyama "High strength AI2O3-Ti(C,N) ceramics by HIP and cutting performance", Material Science Monogr. 66D, 2841-2842 (1991)

## Beschreibung

Gegenstand der vorliegenden Erfindung ist eine Mischkeramik auf Al₂O₃-Basis, Verfahren zu deren Herstellung sowie deren Verwendung.

Mischkeramiken aus Al₂O₃ und ca. 30 Gew.-% TiC, TiN oder Ti(C,N) sind bekannt. Ihr Vorteil im Vergleich zu rein oxidischen Schneidstoffen ist die bessere Wärmeleitfähigkeit und die größere Härte, sowie die damit verbundene bessere Verschleißbeständigkeit. Nachteilig ist jedoch die durch den Hartstoffzusatz bewirkte erhöhte Sprödigkeit und Ausbruchsempfindlichkeit, die die Bearbeitung von beispielsweise gehärteten Stahlteilen mit Schnittunterbrechungen verhindert.

In der US-A-5,342,564 werden Mischkeramiken auf Al₂O₃-Basis mit Hartstoffpartikeln aus TiC oder Ti(C,N) beschrieben, bei denen die mittlere Korngröße der Hartstoffpartikel 1 bis 5 µm beträgt.

In der US-A-4,490,319 werden Mischkeramiken auf Al₂O₃-Basis mit Hartstoffpartikeln beschrieben, bei denen 1:1 Pulvermischungen aus WC mit TiC (-325 mesh) eingesetzt wurden.

In der JP-A-4300241 werden Mischkeramiken auf Al₂O₃-Basis mit Hartstoffpartikeln aus TiC oder Ti(C,N) beschrieben, bei denen die mittlere Korngröße der Hartstoffpartikel mindestens 1 µm betragen.

Die der vorliegenden Erfindung zugrundeliegende Aufgabe war die Bereitstellung einer Mischkeramik auf Al₂O₃-Basis mit hoher Verschleißbeständigkeit, geringer Sprödigkeit und Ausbruchsempfindlichkeit.

Gelöst wurde die Aufgabe überraschenderweise durch eine neue Mischkeramik gemäß Anspruch 1. Vorteilhafte Ausgestaltungen sind in den Unteransprüchen charakterisiert. Die erfindungsgemäße Mischkeramik ist weniger spröde als die bekannten Keramik-Schneidstoffe und kann eingesetzt werden, um gehärtete Stahlteile mit Schnittunterbrechungen spanend zu bearbeiten.

Die erfindungsgemäße Mischkeramik besteht im wesentlichen aus einem extrem feinkörnigen, maßgeschneiderten Gefüge auf der Basis von Al₂O₃, das 20 bis 50 Gew.-% Hartstoffe und 0 bis 5 Gew.-% ZrO₂ enthält. Die Hartstoffe setzen sich zusammen aus Metallcarbiden oder Metallcarbonitriden und entsprechen der Formel M¹M²(C,N); M¹ steht für Titan und M² für Wolfram. Die Al₂O₃-Partikel weisen eine mittlere Korngröße von nicht größer als 0,5 µm und die Hartstoff-Partikel eine mittlere Korngröße von nicht größer als 0,4 *µ*m auf. Wolframcarbid ist in Mengen von 5 bis 10 Gew.-%, vorzugsweise von 5 bis 8 Gew.-%, bezogen auf die Titankomponente, in den Metallcarbiden oder Metallcarbonitriden der Formel M¹M²(C,N) enthalten. Das eingesetzte Titancarbonitrid entspricht der Formel Ti(CₓN_{y}), mit 95/5≤x/y≤30/70. Vorzugsweise enthält das erfindungsgemäße Gefüge Al₂O₃-Partikel mit einer mittleren Korngröße von 0,1 bis 0,4 *µ*m, besonders bevorzugt mit einer mittleren Korngröße von 0,2 *µ*m. Die Hartstoff-Partikel weisen eine mittlere Korngröße von vorzugsweise 0,2 bis 0,4 *µ*m auf. Sie können auch als globulare Körner mit einem Verhältnis von Länge zu Durchmesser von < 2 in dem Gefüge enthalten sein. Von besonderer Bedeutung in den Hartstoffpartikeln ist der Wolframcarbid-Bestandteil. Es muß gewährleistet sein, daß sich das Wolframcarbid vollständig im Titancarbid bzw. dem Titancarbonitrid lösen kann. Hierfür sollte die mittlere Korngröße des Wolframcarbids im Submikronbereich liegen. Besonders bevorzugt sind mittlere Korngrößen von <<0,4 *µ*m.

Die erfindungsgemäße Mischkeramik kann auch Sinterhilfsmittel enthalten. Diese Hilfsmittel können ausgewählt werden aus wenigstens einem Oxid der Elemente Y, Mg, Cr, Ni, Co oder wenigstens einem Oxid der seltenen Erden. Sie können in Mengen bis zu 0,5 Gew.-% eingesetzt werden. Besonders bevorzugt wird als Sinterhilfsmittel MgO eingesetzt.

Hergestellt werden können die erfindungsgemäßen Gefüge dadurch, daß 20 bis 50 Gew.-% einer Mischung aus Titancarbid oder Titancarbonitrid, mit einer spezifischen Oberfläche von > 10 m²/g und, bezogen auf die Titankomponente, 5 bis 10 Gew.-% Wolframcarbid im Submikronbereich, vorzugsweise mit einer mittleren Partikelgröße von ≤ 0,4 *µ*m, mit 50 bis 80 Gew.-% feinkörnigem Al₂O₃-Pulver, gegebenenfalls unter Zusatz von bis zu 5 Gew.-% Zirkonoxid und/oder bis zu 0,5 Gew.-% Sinterhilfsmittel unter organischem Medium oder Wasser in einer Attritorkugelmühle feingemahlen, vermischt und mit einem temporären organischen Binder versetzt wird. Das feinkörnige Al₂O₃-Pulver erhält man beispielsweise durch Vormahlen eines Al₂O₃-Pulvers mit einer spezifischen Oberfläche von 5 m²/g mit TZP-Kugeln in einer Rührwerkskugelmühle. Auf diese Weise erhält man ein Al₂O₃-Pulver mit einer spezifischen Oberfläche von 7 bis 8 m²/g. Die Mahlflüssigkeit wird anschließend beseitigt und das trockene Pulvergemisch durch ein 250 *µ*m Sieb gesiebt. Das gesiebte Pulvergemisch wird in einer Form nach vorgegebenem Druck- und Temperaturverlauf uniaxial oder isostatisch heißgepreßt.

Feingemahlen und vermischt werden die Komponenten vorzugsweise in einer Attritormühle mit Kugeln aus Zirkonoxid.

Als organisches Medium wird ein Lösungsmittel aus der Gruppe der niederen Alkohole, der niederen Ketone, der Kohlenwasserstoffe mit bis zu acht C-Atomen, der Benzine oder deren Mischungen ausgewählt, vorzugsweise wird Isopropanol eingesetzt.

Heißgepresst wird vorzugsweise in einem 1-stündigen Zyklus bei Drücken unterhalb 35 MPa und Temperaturen unterhalb 1750°C, vorzugsweise bei 1600 bis 1650°C.

Nach dem Heißpressen wird der Pressling der Form entnommen und in an sich bekannter Weise endgeformt.

Die erfindungsgemäßen Werkstoffe können vorzugsweise als Schneidstoff zur Zerspanung gehärteter Stahlteile eingesetzt werden.

Die nachfolgenden Beispiele sollen die Erfindung erläutern, ohne sie einzuschränken.

### Beispiel 1 bis 5:

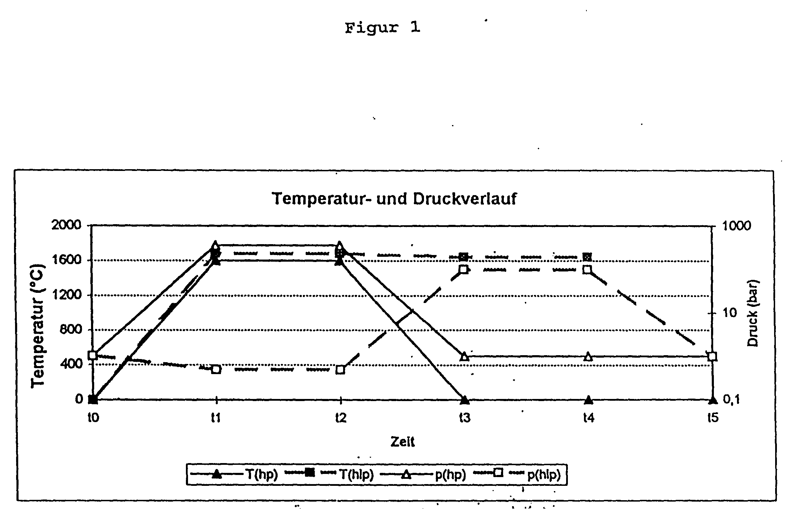

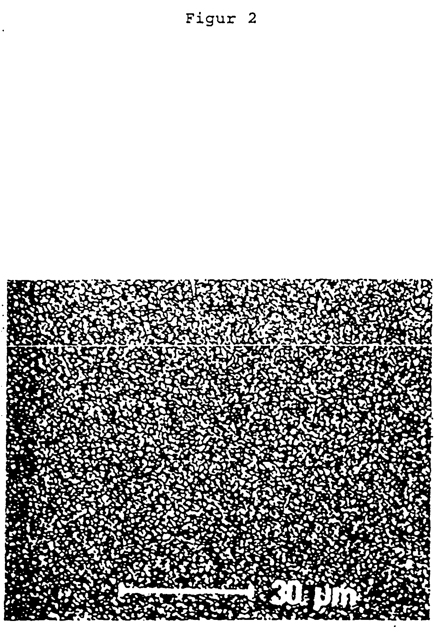

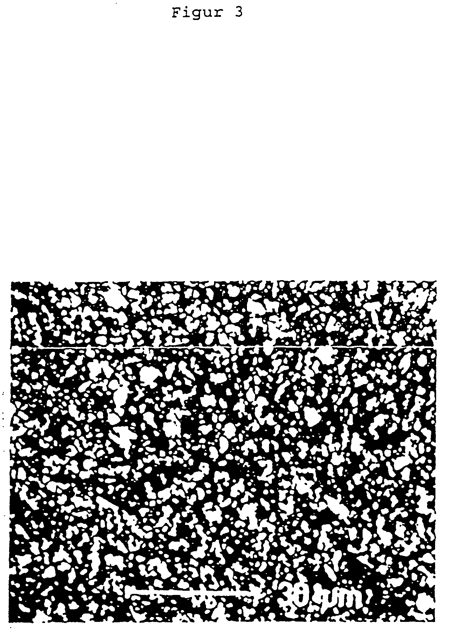

Ti(C,N)-Pulver (> 10 m²/g), WC-Pulver (> 10 m²/g), Al₂O₃-Pulver (10 m²/g) und ZrO₂-Pulver (10 m²/g) werden in den in der Tabelle 1 angegebenen Gewichtsteilen in einer Rührwerkskugelmühle (Attritor) unter organischem Medium 30 Minuten gemahlen und gleichzeitig homogen untereinander gemischt. Das organische Medium wird aus der Mischung abgedampft und das übrige Pulvergemisch durch ein 250 *µ*m Sieb abgesiebt. Das gesiebte Pulver wird dann in einer Graphitform in einem 1-stündigen Zyklus nach vorgegebenem Druck und Temperaturverlauf heißgepreßt. Der Druckbereich liegt unterhalb 35 MPa und der Temperaturbereich bei etwa 1600°C. Die Tabelle 2 veranschaulicht die Toleranzen beim Verdichtungsprozeß, die möglich sind, um die erfindungsgemäßen Mischkeramiken herzustellen. Der Temperatur- und Druckverlauf ist in Fig.1 dargestellt. Die Preßlinge werden nach dem Erkalten der Form entnommen und mit Diamantschleifscheiben zur weiteren Formgebung zu Schneidplättchen verarbeitet. Mit diesen Schneidplättchen werden im Vergleich zu kommerziell verfügbaren Plättchen die in der Tabelle 1 aufgeführten Ergebnisse erzielt. In dieser Tabelle steht GG25 für einen Grauguß, wie er üblicherweise für Bremstrommeln verwendet wird, 100CrMo6 für einen Kugellagerstahl und X63CrMoV5 für einen gehärteten Stahl. An GG25 und 100CrMo6 wurden glatte, an X63CrMoV5 unterbrochene Schnitte durchgeführt. An GG25 wurde die Verschleißmarkenbreite (VB) in mm, an 100CrMo6 die Standzeit in mm und an X63CrMoV5 der Standweg in mm gemessen. Fig.2 zeigt ein Politurbild der erfindungsgemäßen Mischkeramik, Fig.3 das Politurbild einer kommerziell erhältlichen Schneidkeramik jeweils bei 1000-facher Vergrößerung.

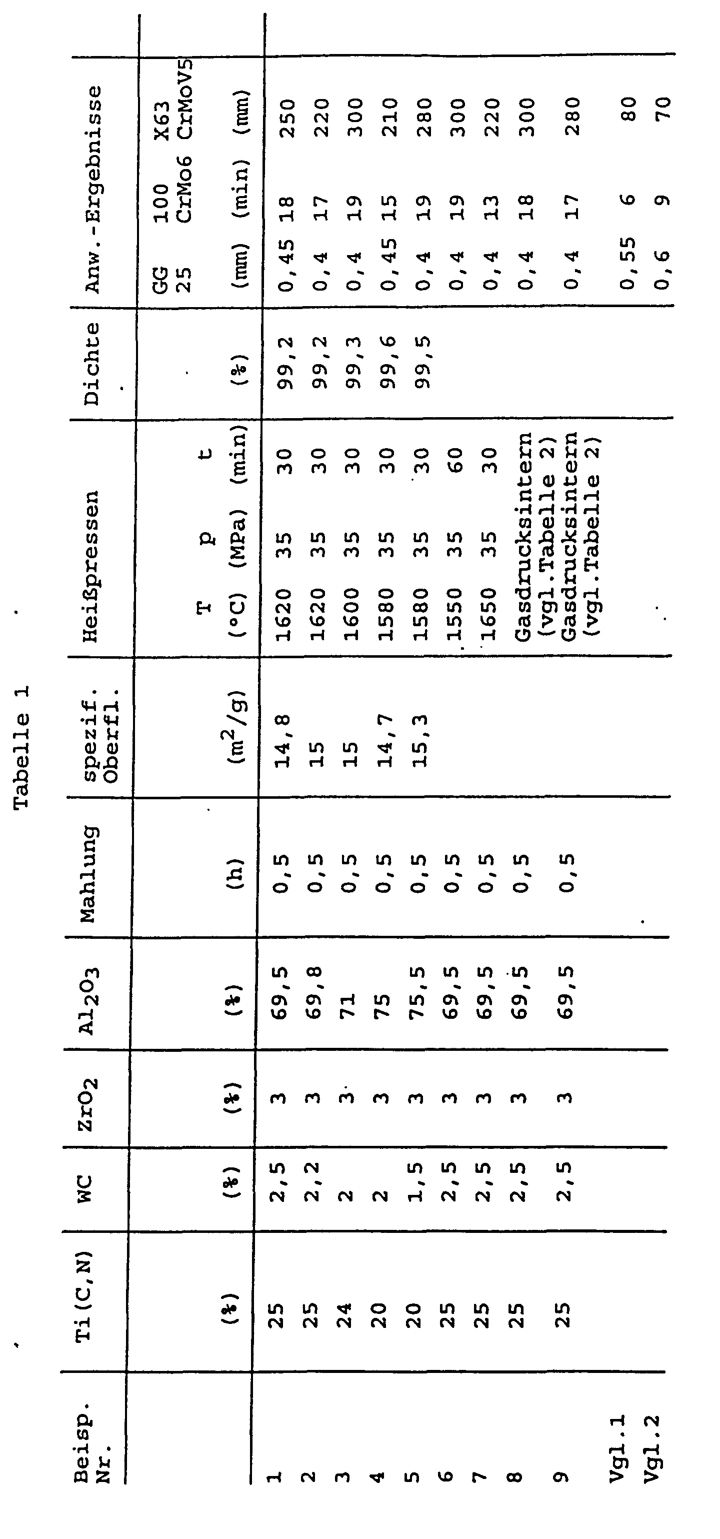

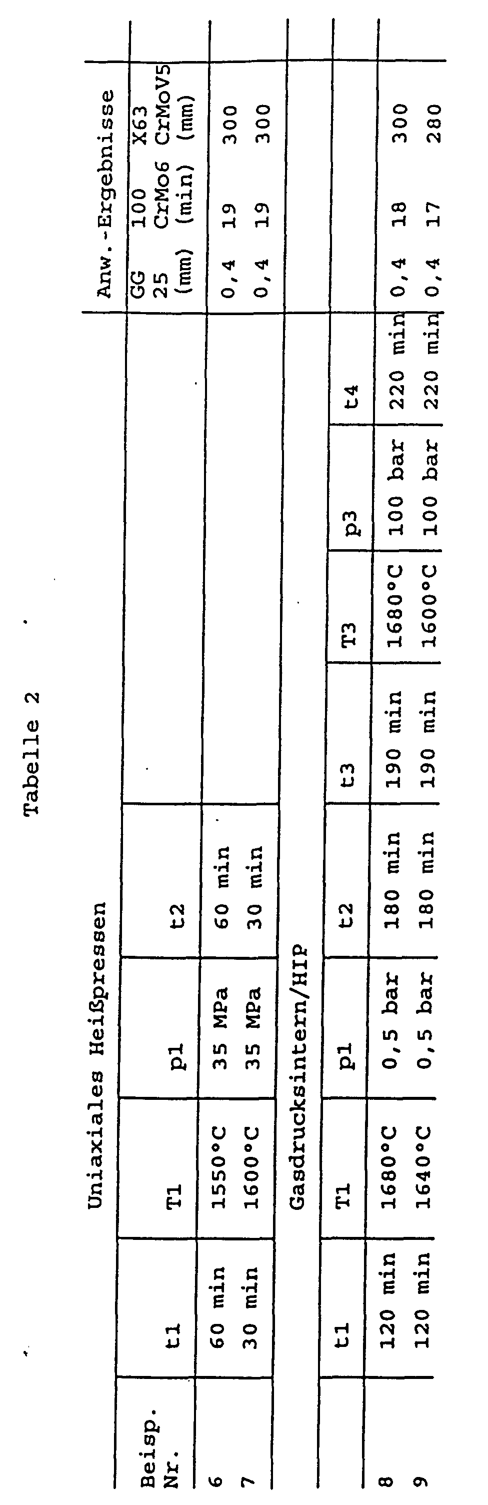

## Patentansprüche

1. Mischkeramik auf Al₂O₃-Basis mit Hartstoffen aus Metallcarbiden oder Metallcarbonitriden welche enthält 20 bis 50 Gew.-% Hartstoffe und 0 bis 5 Gew.-% ZrO₂, wobei sich die Hartstoffe zusammensetzen aus Metallcarbiden oder Metallcarbonitriden und der Formel M¹M²(C,N) entsprechen, in der M¹ für Titan und M² für Wolfram steht, die Al₂O₃-Partikel eine mittlere Korngröße von 0,5 µm und die Hartstoff-Partikel eine mittlere Korngröße von 0,4 µm nicht überschreiten, wobei Wolframcarbid in Mengen von 5 bis 10 Gew.-%, vorzugsweise 5 bis 8 Gew.-%, bezogen auf die Titankomponente, in den Metallcarbiden oder Metallcarbonitriden der Formel M¹M²(C,N) enthalten ist.

2. Mischkeramik gemäß Anspruch 1, **dadurch gekennzeichnet, daß** das eingesetzte Titancarbonitrid der Formel Ti(CₓN_{y}), mit 95/5≤x/y≤30/70, entspricht.

3. Mischkeramik gemäß Anspruch 1 oder 2, **dadurch gekennzeichnet, daß** die Al₂O₃-Partikel eine mittlere Korngröße von 0,1 bis 0,4 µm, vorzugsweise eine mittlere Korngröße von 0,2 µm und die Hartstoff-Partikel eine mittlere Korngröße von 0,2 bis 0,4 µm aufweisen.

4. Mischkeramik gemäß einem oder mehreren der Ansprüche 1 bis 3, **dadurch gekennzeichnet, daß** sie zusätzlich bis zu 0,5 Gew.-% eines Sinterhilfsmittels, ausgewählt aus wenigstens einem Oxid der Elemente Y, Mg, Cr, Ni, Co und den seltenen Erden, enthält.

5. Mischkeramik gemäß einem oder mehreren der Ansprüche 1 bis 4, **dadurch gekennzeichnet, daß** sie als Sinterhilfsmittel MgO enthält.

6. Mischkeramik gemäß einem oder mehreren der Ansprüche 1 bis 5, **dadurch gekennzeichnet, daß** die Hartstoffe aus globularen Körnern mit einem Verhältnis von Länge zu Durchmesser von < 2 enthalten sind.

7. Verfahren zur Herstellung einer Mischkeramik auf Basis von Al₂O₃ mit Hartstoffen aus Metallcarbiden oder Metallcarbonitriden, in dem
a) 20 bis 50 Gew.-% einer Mischung aus Titancarbid oder Titancarbonitrid, mit einer spezifischen Oberfläche von > 10 m²/g und 5 bis 10 Gew.-%, bezogen auf die Titankomponente, Wolframcarbid einer mittleren Partikelgröße von ≤ 0,4 µm mit 50 bis 80 Gew.-% feinkörnigem Al₂O₃-Pulver, gegebenenfalls unter Zusatz von bis zu 5 Gew.-% Zirkonoxid und/oder bis zu 0,5 Gew.-% Sinterhilfsmittel unter organischem Medium oder Wasser in einer Attritorkugelmühle feingemahlen, vermischt und mit einem temporären organischen Binder versetzt,
b) die Mahlflüssigkeit beseitigt,
c) das trockene Pulvergemisch durch ein 250 µm Sieb gesiebt und
d) das gesiebte Pulvergemisch in einer Form nach vorgegebenem Druck- und Temperaturverlauf uniaxial oder isostatisch heißgepreßt wird.

8. Verfahren gemäß Anspruch 7, **dadurch gekennzeichnet, daß** als Sinterhilfsmittel wenigstens ein Oxid der Elemente Y, Mg, Cr, Ni, Co und den seltenen Erden eingesetzt wird.

9. Verfahren gemäß Anspruch 7 oder 8, **dadurch gekennzeichnet, daß** als Sinterhilfsmittel MgO eingesetzt wird.

10. Verfahren gemäß einem oder mehreren der Ansprüche 7 bis 9, **dadurch gekennzeichnet, daß** das Feinmahlen und Vermischen unter Punkt a) bzw. c) in einer Attritormühle mit Kugeln aus Zirkondioxid durchgeführt wird.

11. Verfahren gemäß einem oder mehreren der Ansprüche 7 bis 10, **dadurch gekennzeichnet, daß** als organisches Medium mindestens ein Lösungsmittel aus der Gruppe niedere Alkohole, niedere Ketone, Kohlenwasserstoffe mit bis zu acht C-Atomen oder Benzine ausgewählt ist, vorzugsweise daß es Isopropanol ist.

12. Verfahren gemäß einem oder mehreren der Ansprüche 7 bis 11, **dadurch gekennzeichnet, daß** das Heißpressen in einem 1-stündigen Zyklus bei Drücken unterhalb 35 MPa und Temperaturen unterhalb 1750°C, vorzugsweise bei 1600 bis 1650°C durchgeführt wird.

13. Verfahren gemäß einem oder mehreren der Ansprüche 7 bis 12, **dadurch gekennzeichnet, daß** nach dem Heißpressen der Pressling der Form entnommen und in an sich bekannter Weise endgeformt wird.

14. Verwendung der Mischkeramik gemäß einem der Ansprüche 1 bis 6 als Schneidstoff zur Zerspanung gehärteter Stahlteile.

## Claims

1. Mixed ceramic material based on Al₂O₃ with hard materials composed of metal carbides or metal carbonitrides, which contains 20 to 50% by weight of the hard materials and 0 to 5% by weight of ZrO₂, with the hard materials composed of metal carbides or metal carbonitrides corresponding to the formula M¹M²(C,N), in which M¹ stands for titanium and M² stands for tungsten, the Al₂O₃ particles not exceeding an average grain size of 0.5 *µ*m and the hard-material particles not exceeding an average grain size of 0.4 *µ*m, and with tungsten carbide being contained in amounts of 5 to 10% by weight, preferably 5 to 8% by weight, with respect to the titanium component, in the metal carbides or metal carbonitrides of the formula M¹M²(C,N).

2. Mixed ceramic material according to claim 1, **characterised in that** the titanium carbonitride which is used corresponds to the formula Ti(CₓN_{y}), with 95/5≤x/y≤30/70.

3. Mixed ceramic material according to claim 1 or 2, **characterised in that** the Al₂O₃ particles have an average grain size of 0.1 to 0.4 *µ*m, preferably an average grain size of 0.2 *µ*m, and the hard-material particles have an average grain size of 0.2 to 0.4 *µ*m.

4. Mixed ceramic material according to one or more of claims 1 to 3, **characterised in that** it additionally contains up to 0.5% by weight of a sintering aid, selected from at least one oxide of the elements Y, Mg, Cr, Ni, Co and the rare earths.

5. Mixed ceramic material according to one or more of claims 1 to 4, **characterised in that** it contains MgO as the sintering aid.

6. Mixed ceramic material according to one or more of claims 1 to 5, **characterised in that** the hard materials consist of globular granules with a ratio of length to diameter of < 2.

7. Method for the production of a mixed ceramic material based on Al₂O₃ with hard materials composed of metal carbides or metal carbonitrides, in which
a) 20 to 50% by weight of a mixture of titanium carbide or titanium carbonitride with a specific surface of > 10 m²/g, and 5 to 10% by weight, with respect to the titanium component, tungsten carbide with an average particle size of ≤ 0.4 *µ*m, is mixed and finely ground in an attrition ball mill in the presence of an organic medium or water with 50 to 80% by weight fine-grained Al₂O₃ powder, possibly with the addition of up to 5% by weight zirconium oxide and/or up to 0.5% by weight sintering aid, and a temporary organic binder is added,
b) the grinding liquid is removed,
c) the dry powder mixture is sieved through a 250 *µ*m sieve, and
d) the sieved powder mixture is hot-pressed in a mould, uniaxially or isostatically depending on the predetermined progress of pressure and of temperature.

8. Method according to claim 7, **characterised in that** at least one oxide of the elements Y, Mg, Cr, Ni, Co and the rare earths is used as the sintering aid.

9. Method according to claim 7 or 8, **characterised in that** MgO is used as the sintering aid.

10. Method according to one or more of claims 7 to 9, **characterised in that** the fine grinding and mixing under points a) and c) respectively is carried out in an attrition ball mill with balls made of zirconium dioxide.

11. Method according to one or more of claims 7 to 10, **characterised in that** at least one solvent from the group of lower alcohols, lower ketones, hydrocarbons with up to 8 C atoms or benzines is selected as the organic medium, preferably **in that** it is isopropanol.

12. Method according to one or more of claims 7 to 11, **characterised in that** the hot-pressing is carried out in a 1-hour cycle at pressures of below 35 MPa and temperatures of below 1750°C, preferably at 1600 to 1650°C.

13. Method according to one or more of claims 7 to 12, **characterised in that** after the hot-pressing, the pressed article is removed from the mould and finally shaped in a manner known per se.

14. Use of the mixed ceramic material according to one of claims 1 to 6 as a cutting material for chipping off hardened steel portions.

## Revendications

1. Céramique mixte à base d'Al₂O₃ contenant des matières dures en carbures métalliques ou en carbonitrures métalliques, contenant de 20 à 50 % en poids de matières dures et de 0 à 5 % en poids de ZrO₂, les matières dures étant constituées de carbures métalliques ou de carbonitrures métalliques et correspondent à la formule M¹M²(C,N) dans laquelle M¹ représente du titane et M² du tungstène, la taille moyenne des particules d'Al₂O₃ n'excédant pas 0,5 µm et la taille moyenne des particules de matières dures n'excédant pas 0,4 µm, le carbure de tungstène étant présent dans les carbures ou carbonitrures métalliques de formule M¹M²(C,N) à raison de 5 à 10 % en poids, de préférence à raison de 5 à 8 % en poids rapporté au composant à base de titane.

2. Céramique mixte selon la revendication 1, **caractérisée par le fait que** le carbonitrure de titane utilisé correspond à la formule Ti(CₓN_{y}) avec 95/5 ≤ x/y ≤ 30/70.

3. Céramique mixte selon la revendication 1 ou 2, **caractérisée par le fait que** les particules d'Al₂O₃ présentent une taille moyenne de particules comprise entre 0,1 et 0,4 µm, de préférence égale à 0,2 µm, et les particules de matières dures une taille moyenne comprise entre 0,2 et 0,4 µm.

4. Céramique mixte selon une ou plusieurs des revendications 1 à 3, **caractérisée par le fait qu'**elle contient en outre jusqu'à 0,5 % en poids d'un adjuvant de frittage, choisi parmi au moins un oxyde des éléments Y, Mg, Cr, Ni, Co et les éléments des terres rares.

5. Céramique mixte selon une ou plusieurs des revendications 1 à 4, **caractérisée par le fait qu'**elle contient du MgO en tant qu'adjuvant de frittage.

6. Céramique mixte selon une ou plusieurs des revendications 1 à 5, **caractérisée par le fait que** les matières dures sont présentes sous forme de grains globulaires présentant un rapport longueur/diamètre inférieur à 2.

7. Procédé de fabrication d'une céramique mixte à base d'Al₂O₃ contenant des matières dures constituées de carbures métalliques ou de carbonitrures métalliques, dans lequel
a) on broie et mélange de 20 à 50 % en poids d'un mélange de carbure de titane ou de carbonitrure de titane ayant une surface spécifique supérieure à 10 m²/g et de 5 à 10 % en poids, rapporté au composant à base de titane, de carbure de tungstène ayant une taille moyenne de particules inférieure ou égale à 0,4 µm, avec de 50 à 80 % en poids de poudre fine d'Al₂O₃, en ajoutant éventuellement jusqu'à 5 % en poids d'oxyde de zirconium et/ou jusqu'à 0,5 % en poids d'un adjuvant de frittage, dans un milieu solvant organique ou dans de l'eau, dans un broyeur par frottement à billes, et que l'on mélange le broyat obtenu avec un liant organique temporaire,
b) on élimine le liquide de broyage,
c) on fait passer le mélange pulvérulent séché sur un tamis de 250 µm, et
d) on procède à une compression à chaud uniaxiale ou isostatique du mélange pulvérulent selon un profil de pression et de température prédéterminé.

8. Procédé selon la revendication 7, **caractérisé par le fait que** l'on utilise, comme adjuvant de frittage, au moins un oxyde des éléments Y, Mg, Cr, Ni, Co et des terres rares.

9. Procédé selon la revendication 7 ou 8, **caractérisé par le fait que** l'on utilise, comme adjuvant de frittage, du MgO.

10. Procédé selon une ou plusieurs des revendications 7 à 9, **caractérisé par le fait que** le broyage fin et le mélange de l'étape a) ou c) sont réalisés dans un broyeur par frottement contenant des billes en dioxyde de zinc.

11. Procédé selon une ou plusieurs des revendications 7 à 10, **caractérisé par le fait que** l'on utilise comme milieu solvant organique au moins un solvant organique choisi dans le groupe formé par les alcools inférieurs, les cétones inférieures, les hydrocarbures comportant jusqu'à 8 atomes de carbone ou de l'essence, et de préférence de l'isopropanol.

12. Procédé selon une ou plusieurs des revendications 7 à 11, **caractérisé par le fait que** l'on réalise l'étape de compression à chaud avec un cycle unique d'une heure à des pressions inférieures à 35 MPa et à des températures inférieures à 1750 °C, de préférence à une température comprise entre 1600 et 1650 °C.

13. Procédé selon une ou plusieurs des revendications 7 à 12, **caractérisé par le fait que** le comprimé est retiré du moule après compression à chaud et qu'on lui donne sa forme définitive d'une manière connue.

14. Utilisation de la céramique mixte selon une des revendications 1 à 6, en tant que matière coupante pour l'enlèvement de copeaux à partir de pièces d'acier durcies.
